# EUROPEAN PATENT APPLICATION

(11) **EP 2 168 654 A1**
(43) Date of publication of application: **31.03.2010**
(21) Application number: 09171644.9
(22) Date of filing: 29.09.2009
(51) Int. Cl.: B01D 47/06, A62C 3/02, B01D 47/08

(54) **Apparatus for eliminating dust**

(30) Priority: 30.09.2008 IT MI20081728
(71) Applicant: Ecology S.R.L., 20064 Gorgonzola MI (IT)
(72) Inventor: Passoni, Guido Carlo, 20064 Gorgonzola (IT); Passoni, Matteo, 20064 Gorgonzola (MI) (IT)
(74) Representative: Vanosi, Adelio Valeriano

(57) **Abstract**

A dust elimination apparatus comprises an impeller positioned within a conveyor element, said impeller being rotatably driven by a motor to generate an air flow, said conveyor element presenting, at at least an exit end for said flow, a header arranged to feed a pressurized liquid to a plurality of nozzles positioned thereon in order to atomize said liquid into said flow, **characterised in that** said nozzles are positioned on the header in a manner organized into spaced-apart groups.

## Description

The present invention relates to a dust elimination apparatus in accordance with the pre-characterising part of the accompanying main claim.

More particularly it relates to a dust elimination apparatus which generates a high velocity air flow into which finely atomized water plus a possible additive are fed.

Traditional dust elimination apparatus are known, for example from EP1300177 in the name of the same applicant.

These apparatus require a large motor power to generate a long-throw air/water flow able to hence cover a considerable area aided by the swivel action of the apparatus.

In this respect, if the kinetic energy of the exit flow is not sufficiently large it is unable to drag the atomized water with it to a large distance.

An object of the present invention is to provide an apparatus presenting a throw greater than traditional apparatus for equal motor power.

This and other objects are attained by a dust elimination apparatus in accordance with the technical teachings of the accompanying claims.

Further characteristics and advantages of the invention will be apparent from the description of a preferred but non-exclusive embodiment of the apparatus, illustrated by way of non-limiting example in the accompanying drawings, in which:

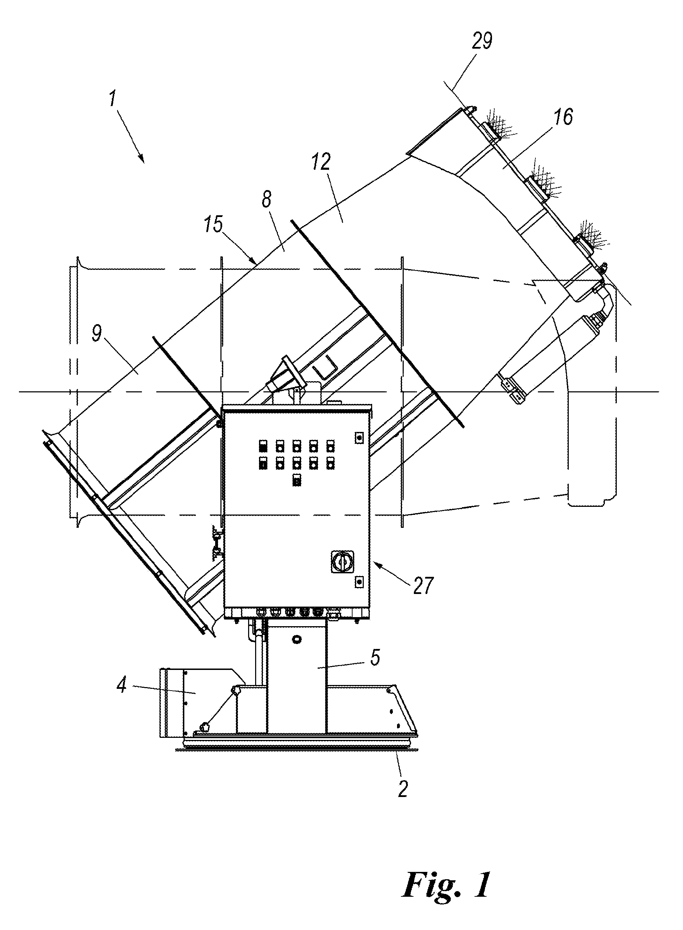

Figure 1 is a side view of a dust elimination apparatus according to the present invention;

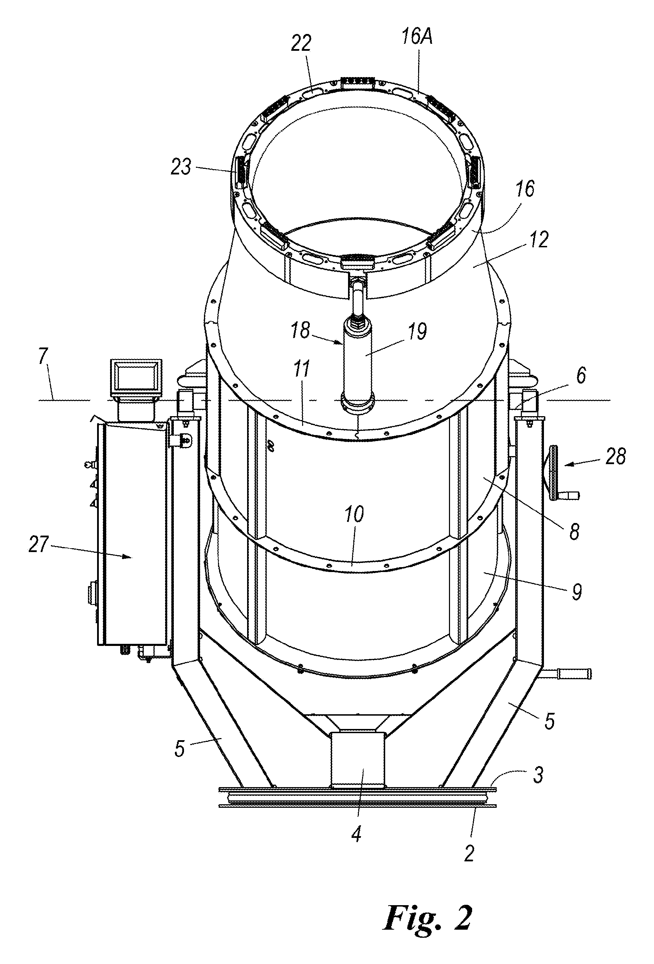

Figure 2 is a front view of the apparatus of Figure 1; and

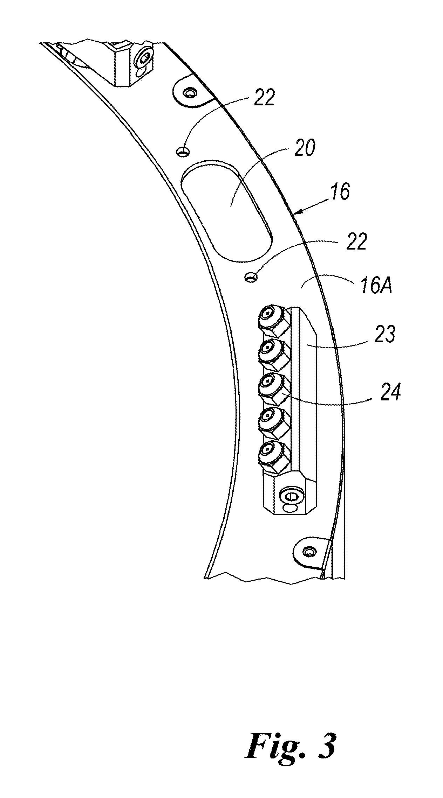

Figure 3 shows an enlarged detail of the apparatus of Figure 1;

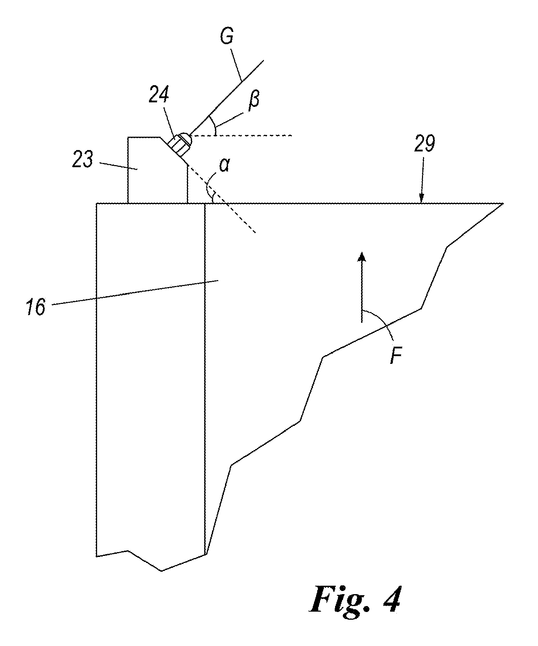

Figure 4 is a simplified side view of a nozzle and part of the header.

With reference to said figures, these show a dust elimination apparatus indicated overall by the reference numeral 1.

It comprises a base 2 on which a platform is rotatably mounted, its rotation being determined by a motor housed in a casing 4. The platform has two arms to which a conveyor element is secured in a manner positionable about an axis 7. The inclination of the conveyor element is controlled by a crank regulator 28. The conveyor element 15 presents a first cylindrical part 8 and a second cylindrical part 9 joined together by bolts secured to a flange 10 present on each part. The first part 8 presents a further flange 11 by which it is fixed to a convergent frusto-conical portion 12.

The first and second cylindrical part house a motor, on the shaft of which an impeller is mounted to generate an air flow F within the apparatus. To the front of the impeller a flow straightener is provided to minimize the rotary component of this latter.

At the end of the convergent portion, a header 16 is provided opposite the flange 11 to feed liquid to a plurality of nozzles positioned thereon. The header presents a feeder 18 in which a filter 19 is located. When in use, a conduit preferably originating from the delivery side of a pump is connected to the feeder. The header frontally presents a substantially flat surface in which a plurality of apertures 20 are provided opening towards the outside of the conduit.

Support elements 23 can be sealedly mounted on these apertures by suitable screws engaged in suitable holes 22. Each support element 23 presents a surface inclined by an angle α of 32.5º (but which can be between 20ºand 45º), on which nozzles 24 are mounted. The flow G originating from the nozzles is hence inclined to the header surface 29 by an angle β of 57.5º (but which can be between 45º and 70º). The support element also presents a passageway which, when fixed to the header, connects the interior of this latter to the nozzles in order to feed them. Advantageously each support element presents five nozzles 24. The support elements 23 advantageously space the nozzles from the flow exit surface 29.

As an alternative to the support elements, the apertures can present plates (not shown) which sealedly close the apertures 20. The plates are fixed by screws engaged in the holes 22.

The impeller, the rotatable platform and the pump (not shown) are controlled by a control unit 27 which governs its operation.

The operation of the invention is apparent to the expert of the art from the aforegoing description, and is as follows.

When the impeller is operated it generates an air flow into which an atomized liquid is fed which, transported by the flow, picks up and eliminates the dust particles present in the area exposed to the flow. The liquid atomized by the nozzles can be simply water or water with known surface active additives.

As will be apparent the nozzles of each group are close together, between one group and the next a certain distance being provided sufficient to prevent said atomized liquid from continuously encountering the perimeter of said flow, at least in proximity to a flow exit surface 29. Essentially, the groups are separated from each other by a distance greater than that which separates two adjacent nozzles of the same group.

It has been surprisingly discovered that by organizing the nozzles into groups and spacing the groups apart, the atomized liquid becomes distributed optimally within the flow and enables this latter to cover a greater distance than the solution in which the nozzles are positioned with continuity on the header, for equal motor power.

In the embodiment described and represented, the support elements and hence the nozzle groups are positioned on the header at the vertices of an octagon. Alternatively they can be positioned for example at the vertices of a square, of a pentagon or of a hexagon.

In concluding the description it should be noted that each nozzle generates a conical jet of atomized liquid.

## Claims

1. A dust elimination apparatus comprising an impeller positioned within a conveyor element, said impeller being rotatably driven by a motor to generate an air flow, said conveyor element presenting, at at least an exit end for said flow, a header arranged to feed a pressurized liquid to a plurality of nozzles positioned thereon in order to atomize said liquid into said flow, **characterised in that** said nozzles are positioned on the header in a manner organized into groups, these groups being spaced apart.

2. An apparatus as claimed in claim 1, **characterised in that** the nozzles of each group are close together, between one group and the next a certain distance being provided sufficient to prevent said atomized liquid from continuously encountering the perimeter of said flow, at least in an outlet region of said flow.

3. An apparatus as claimed in claim 2, **characterised in that** said groups are spaced apart by a distance greater than that which separates two adjacent nozzles of the same group.

4. An apparatus as claimed in one or more of the preceding claims, **characterised in that** each of said groups comprises a support element connected to the header and on which said nozzles are fixed.

5. An apparatus as claimed in the preceding claim, **characterised in that** said support element spaces said nozzles from the flow exit surface.

6. An apparatus as claimed in claim 4, **characterised in that** each of said support elements presents five nozzles.

7. An apparatus as claimed in one or more of the preceding claims, **characterised in that** said groups are positioned on said header at the vertices of a square or of a pentagon or of a hexagon or of an octagon.

8. An apparatus as claimed in one or more of the preceding claims, **characterised in that** said header presents apertures on which the support elements can be fixed in order to be fed, the unused apertures being closed by covers.
